**(19)** Europäisches Patentamt

European Patent Office

Office européen des brevets

**(11)** Veröffentlichungsnummer: **0 221 571**
**A2**

**(12)** # EUROPÄISCHE PATENTANMELDUNG

**(21)** Anmeldenummer: 86115476.3

**(22)** Anmeldetag: 07.11.86

**(51)** Int. Cl.⁴: **B01D 53/14**

**(30)** Priorität: 07.11.85 DE 3539534
11.04.86 DE 3612259

**(43)** Veröffentlichungstag der Anmeldung:
**13.05.87 Patentblatt 87/20**

**(84)** Benannte Vertragsstaaten:
**AT BE CH DE FR LI NL**

**(71)** Anmelder: **TVT Theisen Verfahrenstechnik
GmbH & Co. Anlagenbau KG
Friedrich-Herschel-Strasse 25
D-8000 München 80(DE)**

**(72)** Erfinder: **Gottschling, Rudi, Dipl.-Ing.
Daxerstrasse 29
D-8037 Olching(DE)**
Erfinder: **Riederer, Manfred, Dr.
Kreisler-Weg 4
D-8263 Burghausen(DE)**

**(74)** Vertreter: **Behrens, Dieter, Dr.-Ing. et al
Patentanwälte WUESTHOFF-V.
PECHMANN-BEHRENS-GOETZ
Schweigerstrasse 2
D-8000 München 90(DE)**

**(54)** **Lösemittel-Eliminationsverfahren zur Reinigung von Luft von Lösemitteldämpfen.**

**(57)** Bei einem Lösemittel-Eliminationsverfahrens, insb. einem -Absorptionsverfahren zur Reinigung von Produktionsabluft, Pyrolysegas, Deponiegas, Biogas oder dergleichen von Lösemitteldämpfen wird in einer Absorptionsstufe die verunreinigte Luft mit einer Waschflüssigkeit in innige Berührung gebracht, in einer Aufbereitungsstufe die verunreinigte Waschflüssigkeit einer thermischen Trennung zur Wiedergewinnung der reinen Waschflüssigkeit unterworfen und in einer dritten Stufe das in der Aufbereitungsstufe anfallende flüssige Wasser-Lösemittel-Gemisch einer Wasseraufbereitung unterzogen, in der das Lösemittel abgeschieden und das Wasser soweit gereinigt wird, daß es wiederverwendet oder als Abwasser in ein Entsorgungssystem abgeleitet werden kann. Um die Absorption in der ersten Stufe technologisch vorteilhafter und die Rückgewinnung der Waschflüssigkeit in der zweiten Stufe leichter und vollständiger zu ermöglichen, ist in der Absorptionsstufe vorgesehen, daß die Absorption der Lösemitteldämpfe an Dimethylpolysiloxan oder einem polyalkylenmodifizierten Siloxanöl mit niedrigem Oligomergehalt als Waschflüssigkeit vorgenommen wird. Bei Verwendung eines Siloxanöl-Wasser-Gemisches läßt sich die Aufbereitung der verschmutzten Waschflüssigkeit in der Aufbereitungsstufe derart führen, daß eine Wasserdampfrektifikation ohne äußere Dampfzufuhr bei verbessertem Stoffaustausch möglich ist. Der Absorption in der ersten Stufe kann sich noch eine Adsorption an festem Adsorbens für die wasserarme Rückgewinnung niedrigsiedender Lösemittel (Nachreinigung) anschließen.

## Lösemittel-Eliminationsverfahren zur Reinigung von Luft von Lösemitteldämpfen

Die Erfindung betrifft ein Lösemittel-Eliminationsverfahren zur Reinigung von Luft, Abgasen oder dgl. von Lösemitteldämpfen gemäß dem Oberbegriff von Patentanspruch 1.

Die Luftreinigung von mit industriellen Lösemitteldämpfen verunreinigter Luft erfolgt meist entweder durch Adsorption an einem Adsorptionsmittel, z.B. an Aktivkohle, oder durch physikalische oder chemische Absorption, oder durch Verbrennung. Während bei der chemischen Absorption und der Verbrennung naturgemäß eine Lösemittelrückgewinnung ausgeschlossen ist, zählen die Adsorption an einem Adsorptionsmittel und die physikalische Absorption an einer Waschflüssigkeit bzw. Waschlösung zu den Verfahren, die eine Lösemittelrückgewinnung ermöglichen. Als Waschflüssigkeit werden Wasser, mineralische Öle oder schwerflüchtige organische Lösemittel eingesetzt. Nachteilig ist aufgrund des, wenn auch niedrigen, Dampfdrucks, daß man Waschflüssigkeitsrückstände in der gereinigten Luft wiederfindet, wobei es sich dabei um gerade ihrer Giftigkeit oder Unverträglichkeit wegen unerwünschte oder unzulässige Dämpfe handelt, so daß ein hoher Reinigungsgrad erreicht werden muß, damit die durch den Gesetzgeber oder die Behörden festgelegten Emissionsgrenzwerte in der gereinigten Luft nicht überschritten werden. Außerdem bedeuten Abgänge an Waschflüssigkeit mit der gereinigten Luft einen zu ersetzenden Verlust an Waschflüssigkeit, der bei teuren Waschflüssigkeiten wirtschaftlich beachtlich sein kann.

In jedem Fall ist bestrebt, die eingesetzte Waschflüssigkeit nach Abtrennung der Verunreinigungen in einer zweiten Stufe, z.B. der Waschflüssigkeits-Aufbereitungsstufe, möglichst vollständig wiederzugewinnen, um sie im Kreislauf der ersten Stufe, der Absorptionsstufe, wieder zuführen zu können. Wegen des breiten Siedebereichs der meisten bisher eingesetzten Waschflüssigkeiten ist die Trennung durch Destillation und/oder Rektifikation schwierig, weshalb die Wasserdampfdestillation mit Treibdampf oder ein ähnliches, den Partialdruck des Lösemitteldampfs erniedrigendes Destillations-oder Rektifikationsverfahren angewendet werden muß, um die Waschflüssigkeit möglichst rein wiederzugewinnen. Die Wasserdampfdestillation betreibt man vielfach derart, daß als Kopfprodukt eine Mischung aus Wasserdampf und Lösemitteldampf abgeht, die zu kondensieren und in ihre Komponenten zu trennen ist. Das kondensierte Kopfprodukt läßt sich in die beiden flüssigen Komponenten Wasser und Lösemittel mechanisch trennen, wenn letzteres nur gering im Wasser löslich ist, jedoch vielfach nicht vollständig.

Da das Wasser als Abwasser letztlich in die Kanalisation abgeleitet werden soll, muß es zunächst in einer dritten Stufe, einer Abwasseraufbereitungsstufe, weiter aufbereitet werden, um die Bestandteile an mitabgegangener Waschflüssigkeit und das mitgenommene Lösemittel auszuscheiden.

Bei einem anderen bekannten Lösemittelabsorptionsverfahren, das zur Trennung von Neutralgasgemischen in die einzelnen Gaskomponenten dient (DE-PS 26 51 323), wird in der ersten, der Absorptionsstufe als Waschflüssigkeit ein Methylsiliconöl, Methylwasserstoffsiliconöl und/oder ein polyoxyalkylenmodifiziertes Siliconöl oder werden bestimmte andere Lösemittel eingesetzt. Zur Abtrennung von radioaktivem Edelgas aus Stickstoff o.dgl. Gas wird als Lösemittel vornehmlich Methylenphenylsiliconöl verwendet. Zu den verwendbaren Siliconölen zählt auch Dimethylpolysiloxanöl. In der Absorptionsstufe werden Füllkörper-, Glockenböden-oder Siebbödenkolonnen eingesetzt, in denen im Gegenstrom zur am Kopf eingeleiteten Waschflüssigkeit das unten eingeleitete Gasgemisch nach oben strömt, so daß am Kopf gereinigtes Gas und am Boden verunreinigte Waschflüssigkeit abgezogen werden. Die Aufbereitung der verunreinigten Waschflüssigkeit erfolgt in einem Abstreifturm, dem die verunreinigte Waschflüssigkeit am Kopf zugegeben wird und in den unten zur Wasserdampfdestillation Dampf eingeleitet wird. Bei Anwendung dieses Verfahrens auf die Abtrennung von Krypton aus Stickstoff tritt am Kopf des Abstreifturms ein Wasserdampf-Krypton-Gemisch aus, das durch Kondensation des Wasserdampfs in Krypton und Wasser getrennt wird, welch letzteres am Kopf des Abstreifturms wieder aufgegeben wird. Als Sumpfprodukt wird Wasser zusammen mit der Waschflüssigkeit, in diesem Fall Methylenvinylsiliconöl, abgezogen. In einem mechanischen Wasserscheider erfolgt die Rückgewinnung der im Wasser nicht löslichen Waschflüssigkeit. Die Waschflüssigkeit wird nach weiterer Kühlung der Absorptionskolonne der ersten Stufe und das Wasser dem Dampfgenerator für die Erzeugung des Dampfes wieder zugeführt. Waschflüssigkeit und Wasser werden bei diesem Verfahren im Kreislauf geführt. Es eignet sich in dieser Ausgestaltung nur für die Abtrennung von Gasen, z.B. von radioaktiv verseuchten Gasen, wie Krypton, aus Luft oder ähnlichen Gasen, z.B. reinem Stickstoff.

Der Erfindung liegt die Aufgabe zugrunde, das eingangs genannte gattungsgemäße Verfahren dahingehend zu verbessern, daß die Abscheidung der Lösemitteldämpfe, die als Einzelsubstanzen bei Umgebungsdruck und -temperatur kondensieren, in der ersten Stufe technologisch vorteilhafter und die Rückgewinnung der Waschflüssigkeit in der zweiten Stufe leichter und vollständiger möglich ist. Ferner soll die Ausscheidung des Lösemittels, insbesondere aus dem Abwasser, derart möglich sein, daß es unbedenklich in die übliche Abwasserkanalisation oder in Wasserreinigungsanlagen für städtische und/oder industrielle Abwässer gegeben werden kann. Zu den abzuscheidenden Lösemitteldämpfen zählen die industriell vielfach verwendeten Lösemittel Äther, Ester, Ketone, Aldehyde, aliphatische, aromatische und halogenierte Kohlenwasserstoffe, ebenso wie acyclische, mono- und/oder polycyclische sowie gesättigte und/oder ungesättigte Kohlenwasserstoffverbindungen, bei denen kein, ein oder mehrere Wasserstoffatome durch Halogenatome substituiert sind und/oder deren Molekül keine, eine oder mehrere funktionellen Gruppen hat, sowie heterocyclische organische Verbindungen bzw. deren Gemische.

Zur Lösung dieser Aufgabe sieht die Erfindung vor, daß bei dem gattungsgemäßen Verfahren in der ersten Stufe eine Absorption der Verunreinigungen an Dimethylpolysiloxanöl oder einem polyalkylenmodifizierten Siloxanöl als Waschflüssigkeit vorgenommen wird.

Die Verwendung dieses Siloxanöls oder eines polyalkylenmodifiziertes Siloxanöls in einer Absorptionsstufe der ersten Stufe hat den Vorteil, daß mit der gereinigten Luft abgehende geringe Ölmengen physiologisch unbedenklich sind und daher keine besonderen Anstrengungen unternommen werden müssen, um Konzentrationsgrenzen des Siloxanöls in der gereinigten Luft einzuhalten. Gesetzliche oder administrative Grenzwerte gibt es nicht. Das verwendete Siloxanöl hat ein sehr gutes Lösungsverhalten für industriell benutzte Lösemittel, wie Äther, Ester, Ketone, Aldehyde, aliphatische und aromatische Kohlenwasserstoffe sowie halogenierte Kohlenwasserstoffe. Es ist reaktionsinert bezüglich der genannten auszuscheidenden Lösemittelanteile. Es zeichnet sich auch durch eine hohe chemische und thermische Beständigkeit als Waschflüssigkeit aus, und ist daher lange im Kreislauf einsetzbar. Der Dampfdruck des verwendeten Siloxanöls soll gering sein, der Flammpunkt und die Selbstentzündungstemperatur hoch. Das zu verwendende Siliconöl hat einen sehr engen Siedebereich, was in der zweiten, der Aufbereitungsstufe die Aufbereitung der verschmutzten Waschflüssigkeit ganz erheblich erleichtert.

Da das einsetzbare Siloxanöl im Gegensatz zu den bekannten anderen Waschflüssigkeiten keine Emissionsgrenzwerte existie ren, ist die Aufbereitung des aus der zweiten Stufe möglicherweise austretenden Abwassers erleichtert, da die bei der Wasseraufbereitung im Abwasser verbleibenden Mengen Siloxanöl derart gering sind, daß sie in jedem Fall unbedenklich sind, zumal sie im übrigen erfahrungsgemäß leicht im Klärschlamm der biologischen Kläranlage gebunden werden.

Überraschenderweise hat sich gezeigt, daß bei bestimmten aus Abgas usw. zu entfernenden Lösemitteln eine Polyalkylenmodifikation des verwendeten Siloxanöls weitaus höhere Absorptionskapazitäten ermöglicht und daraus ein beträchtlicher Betriebskostenvorteil erwächst. Gleichermaßen zeigt es sich, daß bei verschiedenen Modifikationen des Absorptionsmittels eine erhöhte Empfindlichkeit hinsichtlich der Wasserdampfverträglichkeit dieses Absorptionsmittels auftritt, so daß sich für deren Aufbereitung eine Wasserdampfdestillation nicht anbietet, sich aber stattdessen eine Inertträgergasdestillation eignet.

Um die üblicherweise in der zweiten, der Aufbereitungsstufe auftretenden Probleme der möglichst vollständigen Trennung der Waschflüssigkeit aus dem Waschflüssigkeits-Verunreinigungs-Gemisch zu vermeiden, hat es sich in einigen Fällen als besonderes günstig erwiesen, wenn gemäß Patentanspruch 2 die Absorption an einem Dimethylpolysiloxanöl-Wasser-Gemisch vorgenommen wird. Dies bringt den Vorteil, daß in der Absorptionsstufe eine noch bessere Absorption der einzelnen Lösemitteldampfkomponenten (es liegen ja vielfach mehr als nur eine vor) erreicht wird, so daß Luft oder Abgas, das Lösemitteldampf enthält, der bevorzugt in polaren Flüssigkeiten löslich ist, z.B. Wasser, und außerdem Lösemitteldampf aufweist der bevorzugt in unpolarer Waschflüssigkeit (z.B. Dimethylpolysiloxanöl) löslich ist und gegebenenfalls heiß ist, in der Absorptionsstufe leicht vollständig gereinigt wird. Dadurch, daß in der Aufbereitungsstufe das zu reinigende Waschflüssigkeits-Verunreinigungs-Gemisch bereits Wasser enthält, das in dieser Stufe dann ausdampft, wird die Reinigungseffektivität und damit Leistung dieser Stufe überraschend stark verbessert.

Bei der Verwendung eines Siloxanöl-Wasser-Gemisches läßt sich die Aufbereitung der verschmutzten Waschflüssigkeit in der Aufbereitungsstufe aufgrund der innigen Vermischung von Wasser und Siloxanöl bei entsprechendem Mischungsverhältnis derart führen, daß die Wasserdampfrektifikation auch ohne äußere Direkt-Dampfzufuhr aus einem Wasserdampfgenerator betrieben werden kann. Dies hat den Vorteil, daß das Stoffaustausch noch weiter verbessert ist, weil aller Dampf im zu reinigenden Medium selbst entsteht. Bei mit Wasser Azeotrope bildenden Verunreinigungen hat diese Arbeitsweise den Vorteil, daß mit einer geringeren Arbeitstemperatur im Rektifikationsapparat gearbeitet werden kann. Eine weitere Verringerung der Arbeitstemperatur in der Aufbereitungsstufe wird durch die Variation des Systemdruckes erreicht. Darüberhinaus läßt sich bei vielen Lösemitteldämpfen in der ersten Stufe eine reinere Luft erzielen, die zudem kühler anfällt, weil im Absorptionsturm eine Verdunstungskühlung erfolgt.

Industrielle Abgase enthalten neben den genannten Lösemitteldämpfen häufig auch noch staubförmige und/oder aerosolförmige Bestandteile. Die Reinigung derartiger Abgase gelingt in den üblicherweise eingesetzten Füllkörper-, Glockenböden-oder Lochböden-oder ähnlichen Kolonnen nicht befriedigend, da die festen Bestandteile sich ablagern und zu dauernden Verschmutzungen und damit Leistungsminderungen führen. Zur Überwindung dieses Nachteils sieht eine Ausgestaltung der Erfindung daher vor, daß die Absorption in einem Gaswäscher vom Desintegratortyp, insbes. einem Theisen-Wäscher (DE-PS 32 20 328), vorgenommen wird. Ein derartiger Wäscher ist gegen staubförmige Bestandteile unempfindlich und gewährleistet eine hohe Reinigungsleistung, indem die staubförmigen Bestandteile ebenfalls nahezu vollständig an die Waschflüssigkeit gebunden werden, wobei gleichzeitig aufgrund der sich einstellenden Stoffübergangsbedingungen die dampfförmigen Verunreinigungen weitestgehend an die Waschflüssigkeit gebunden werden. In diesem Zusammenhang erweist sich insbes. eine Waschflüssigkeit, die Wasser enthält, als vorteilhaft, weil diese staubförmigen Ver unreinigungen dann in der zweiten Stufe, der Aufbereitungsstufe zusammen mit dem Wasser abgetrennt werden können und beispielsweise in einem besonderen Feststoff-Flüssigkeits-Abscheider in bekannter Weise abgeschieden werden.

Das einzusetzende Dimethylpolysiloxanöl oder anwendungsspezifisch polyalkylenmodifiziertes Siloxanöl steht mit unterschiedlichen aber jeweils definierten Siedepunkten und Viskositäten zur Verfügung. Diese Eigenschaften sind abhängig u.a. von seinem Molekulargewicht. Für die genannten verbreitesten auszuscheidenden Verunreinigungen haben sich Dimethylpolysiloxanöle mit einem Molekulargewicht von 1 200 bis 30 000 als zweckmäßig erwiesen. Deren Siedeverhalten kommt der Trägerdampfdestillation in der zweiten Stufe mit Hinblick auf das abzuführende Abwasser sehr entgegen.

Für eine wasserarme Rückgewinnung niedrigsiedender Lösemittel, wie z. B. Aceton, Methylethylketon, Ethylacetat und dgl. und bei starken produktionsbedingten Schwankungen der Lösemittelkonzentration in der Prozeßabluft hat sich eine Ausgestaltung der Erfindung als zweckmäßig erwiesen, bei der die Luftreinigung in der ersten Stufe in zwei oder drei Luftreinigungsstufen erfolgt, indem der Absorption der Lösemitteldämpfe an Dimethylpolysiloxanöl unterworfene Luft durch Adsorption von Resten der Lösemitteldämpfe an festem Adsorbens nachgereinigt wird. Das Adsorbens sollte durch Zufuhr eines Inertgases in inerter Atmosphäre desorbiert bzw. regeneriert werden, wobei die Desorption zweckmäßigerweise bei niedrigem Druck und niedriger Temperatur, vorzugsweise unter 380 K, vorgenommen wird. Die Regeneration des Adsorbens und der beladenen Absorptionsflüssigkeit kann gemeinsam im Verbund erfolgen. Mit aus der Aufbereitungsstufe abgehendem heißen Lösemitteldampf-Inertgas-Gemisch kann das Inertgas zur Regenerierung des Adsorbens vorgewärmt werden.

Die Kombination von Absorption der Lösemitteldämpfe an Dimethylpolysiloxanöl und Adsorption der verbliebenen Lösemitteldämpfe in einem, vorzugsweise regenerierbaren festen Adsorbens, wie z.B. Aktivkohle, Silicagel oder zeolithische Molekularsiebe, hat im vorliegenden Falle den Vorteil, daß starke produktionsbedingte Schwankungen der Lösemittelkonzentration in der Prozeßabluft von den Absorptionsstufen abgefangen und ausgeglichen werden, wobei eventuell mitgeführte Stäube oder Aerosole im Desintegrator wirkungsvoll abgeschieden werden und nicht zu Störungen in den nachfolgenden Luftreinigungsstufen führen. Bei Nichtvorhandensein solcher Störstoffe kann diese Stufe entfallen. Die an die Absorption anschließende Adsorption gewährleistet die Einhaltung der Emissionsgrenzwerte unter günstigsten Investitions-und Betriebskosten zumal Adsorbens und Absorptionsflüssigkeit mit dem gleichen Medium im Verbund regneriert werden können.

Für die Durchführung des neuen Verfahrens eignen sich handelsübliche bekannte Apparate.

Das erfindungsgemäße Verfahren läßt sich zur Reinigung von Prozeßabluftströmen der chemischen Industrie, (z.B. Vakuumpumpenabluft), der metallverarbeitenden Industrie (z.B. Absaugugen von Metallentfettungslinien), der Lackierbetriebe (Absaugung von Lackierkabinen), der Beschichtungsbetriebe (Abluft aus Kaschieranlagen), der Druckbetriebe (Abluft der Druckwalzenreinigung), in denen mit niedrigsiedenden Lösemitteln gearbeitet wird, in der Lebensmittel-und pharmazeutischen Industrie für die Wirkstoffextraktion, bei der Folienherstellung, der Beschichtung mit lösemittelhaltigen Überzügen und in der optischen und Halbleiterindustrie (Entfettungsanlagen für Gläser und Substrate) und in anderen Industrien mit gleichgelagerten Aufgaben einsetzen.

In gleicher Weise eignet sich das erfindungsgemäße Verfahren zur Reinigung von Deponiegas, Biogas und Pyrolysegas, welches vor der Nutzung in Gasmotoren u.a. von Dämpfen halogenierter Kohlenwasserstoffe befreit werden muß.

Ausführungspiele der Erfindung sind anhand einer Zeichnung näher erläutert, in der zeigen:

Fig. 1 das Fließbild einer Anlage für die Lösemitteldampfabsorption, bei welcher ein Phenylmethylpolysiloxanöl-Wasser-Gemisch als Waschflüssigkeit in einem geschlossenen Kreislauf verwendet wird,

Fig. 2 das Fließbild einer Anlage für die zweistufige Löse mitteldampfabsorption, bei welcher ein Dimethylpolysiloxanöl-Wasser-Gemisch als Waschflüssigkeit sowie für die anschließende Wiedergewinnung des Siloxanöls und für die Wasseraufbereitung verwendet wird,

Fig. 3 das Fließbild einer Anlage für die Lösemitteldampf absorption von Deponiegas, bei dem Dimethylpolysiloxanöl als Waschflüssigkeit eingesetzt wird, und

Fig. 4 das Fließbild einer Anlage für die Lösemitteldampf-Elimination und wasserfreie Rückgewinnung des Lösemittels aus der Produktionsabluft einer Kaschieranlage, bei welcher in der ersten Stufe die lösemitteldampfverunreinigte Produktionsablauft zunächst durch Absorption an im geschlossenen Kreislauf geführtem Dimethylpolysiloxanöl vorgereinigt und anschließend verbliebenes Lösemittel durch Adsorption an festem Adsorbens weitestgehend aus der Produktionsabluft entfernt wird und die Regeneration des Adsorbens und der beladenen Absorptionsflüssigkeit gemeinsam erfolgen.

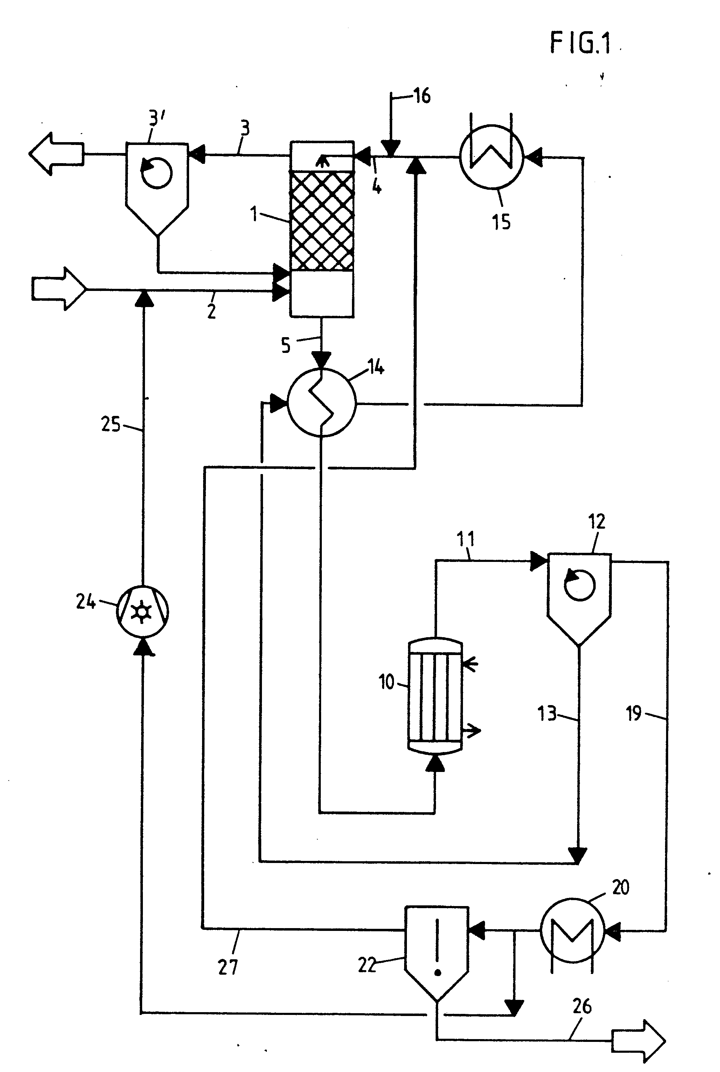

Bei der dreistufigen Anlage gemäß Fig. 1 wird eine erste Stufe, der Absorptions-oder Luftreinigungsstufe, eine Absorptionskolonne 1 eingesetzt, die gemäß einer alternativen Ausführungsform auch als Gaswäscher vom Desintegratortyp ausgebildet sein kann. Ihr wird über eine Einlaßleitung 2 das zu reinigende Luft-Dampf-Gemisch unten zugeführt. Über eine Leitung 4 wird Wasch flüssigkeit in Form eines Gemisches aus Dimethylpolysiloxanöl und Wasser oben eingesprüht. Innerhalb der Absorptionskolonne 1 werden Waschflüssigkeit und zu reinigendes Gas im Gegenstrom zueinandergeführt. Die Lösemitteldämpfe werden dabei vom Siloxanöl absorbiert. Gereinigte Luft tritt nahe dem Kopf durch eine Auslaßleitung 3 aus. Sie enthält nach Passieren eines Aerosolabscheiders 3' keine oder nur sehr geringe Mengen an mitgerissenem Siloxanöl, das unbedenklich ist, und gegebenenfalls Wasser(-dampf).

Am Boden der Absorptionskolonne 1 wird die Waschflüssigkeit zusammen mit den aufgenommenen Lösemitteldampf-Verunreinigungen in flüssiger Form abgezogen und über Rohrleitung 5 einer zweiten Stufe, der Waschflüssigkeits-Aufbereitungsstufe zugeführt, in welcher die Trennung des Siloxanöls von den anderen Bestandteilen (Wasser und ausgeschiedene Verunreinigungen - (Lösemittel)) erfolgt. Dazu wird ein thermisches Trennverfahren eingesetzt, beispielsweise eine Wasserdampfdestillation oder eine Rektifikation in einem entsprechenden Apparat 10. Der Apparat 10 hat hier die Form eines Vakuum-Steigfilmverdampfers. Die notwendige Heizenergie wird durch indirekte Beheizung des Steigfilmverdampferbündels der zu trennenden Waschflüssigekit zugeführt. Vom Kopf des Apparats 10 wird ein Gemisch aus flüssigem Siloxanöl sowie dampfförmigem Wasser- und Lösemittel über eine Auslaßleitung 11 in einen mechanischen Trennapparat 12 in Form eines Zyklonabscheiders übergeleitet. Aus diesem wird das flüssige Siloxanöl über eine Leitung 13 abgezogen und zunächst in einem Wärmeaustauscher 14 vorgekühlt, der gleichzeitig zur Vorwärmung der aus der Absorptionskolonne 1 abgezogenen Waschflüssigkeit dient. Nach weiterer Temperaturerniedrigung in einem Kühler 15 und Wasserzumischung über eine Leitung 16 wird die aufbereitete Waschflüssigkeit wieder in den Kopf der Absorptionskolonne 1 eingesprüht. Das aus dem Kopf des Zyklons 12 über eine Leitung 19 austretende dampfförmige Wasser-Lösemittel-Gemisch wird nach Kondensation in einem Kondensator 20 wiederum einem Trennapparat 22 zugeführt. Eine Vakuumpumpe 24 erzeugt den nötigen Unterdruck im System. Die Druckseite der Vakuumpumpe ist über eine Rückleitung 25 mit der Einlaßleitung 2 verbunden. Wenn das nun flüssige Lösemittel in Wasser nicht oder nur schlecht löslich ist, können Lösemittel und Wasser mechanisch ausreichend voneinander getrennt werden, wozu hier ein Trennapparat 22 in Form eines Schwerkraftabscheiders vorgesehen ist. Das abgetrennte Lösemittel wird über eine Leitung 26 dem Prozeß, dem es entstammt, wieder zugeführt. Das aus dem Trennapparat 22 abgezogene Wasser ist nicht ganz rein sondern weiterhin mit Spuren von Lösemittel beladen. Dieses Wasser kann daher im allgemeinen nicht unmittelbar in eine kommunale Abwasserkanalisation oder eine Abwasserreinigungsanlage abgeleitet werden und muß gereinigt werden.

Es kann aber bei geringem Gehalt an Lösemittel dem im Zyklon abgetrennten Siloxanöl über eine Wasserrückführleitung 27 in der Leitung 4 zugemischt werden, so daß auf diese Weise die Waschflüssigkeit in Form eines Siloxanöl-Wasser-Gemischs entsteht, das in die Absorptionskolonne 1 eingesprüht wird. Es liegt dann ein geschlossener Wasserkreislauf vor. Die über die Leitung 3 als Verdunstungswasser dem Systemkreislauf entzogene Wassermenge kann als Zusatzwasser in die Wasserrückführleitung 16 eingebracht werden. Es hat sich gezeigt, daß die gemeinsame Einspeisung von verschmutzter Waschflüssigkeit und Wasser in den thermischen Trennapparat 22 eine hohe Reinigungsleistung bewirkt, da das Wasser im Trennapparat unmittelbar aus der Waschflüssigkeit heraus verdampft und dadurch einen besonders guten Stoffaustausch bewirkt.

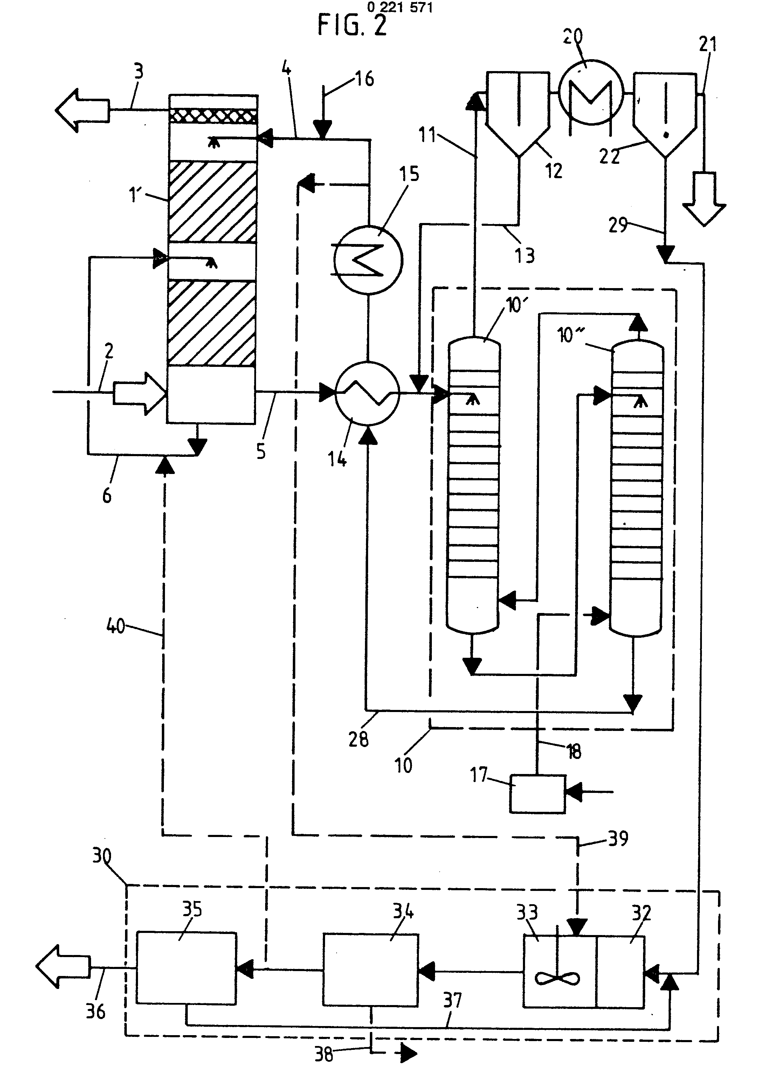

Bei der in Fig. 2 dargestellten Anlage wird in der ersten Stufe, der Absoprtions-oder Luftreinigungsstufe, eine mehrstufige Absorptionskolonne 1' eingesetzt, die gemäß einer alternativen Ausführungsform in einer oder mehreren Stufen auch als Gaswäscher vom Desintegratortyp ausgebildet sein kann. Über eine Einlaßleitung 2 wird unten in die Absorptionskolonne 1 das zu reinigende Luft-Lösemitteldampf-Gemisch eingeleitet. Innerhalb der Absorptionskolonne 1 werden Waschflüssigkeit und zu reinigendes Gas im Gegenstrom zueinander geführt. Die Lösemitteldämpfe werden dabei vom Siloxanöl absorbiert. Gereinigte Luft tritt aus dem Kopf der Kolonne durch die Auslaßleitung 3 aus und passiert einen in der Kolonne 1' integrierten Abscheider. Sie enthält keine oder nur sehr geringe Mengen an mitgerissenem Siloxanöl, das aber unbedenklich ist, und gegebenenfalls Wasser(-dampf). Die im vorliegenden Falle zweistufig ausgeführte Absorptionskolonne 1' wird im unteren Bereich mit im Kreislauf über Leitung 6 geförderter Waschflüssigkeit beschickt, während über Leitung 4 der obere Bereich mit regenerierter Waschflüssigkeit in Form eines Gemisches aus Dimethylpolysiloxanöl und Wasser berieselt wird. Die Waschflüssigkeiten aus dem oberen und unteren Bereich der Absorptionskolonne 1' werden gemeinsam im Sumpf der Absorptionskolonne gesammelt, von wo die Waschflüssigkeit zusammen mit den aufgenommenen Lösemitteldampf-Verunreinigungen in flüssiger Form abgezogen und über eine Rohrleitung 5 der zweiten Stufe, der Waschflüssigkeits-Aufbereitungsstufe 10 zugeführt wird, in welcher die Trennung des Siloxanöls von den anderen Bestandteilen (Wasser und ausgeschiedene Verunreinigungen (Lösemittel)) erfolgt.

In der weiteren Stufe wird ein thermisches Trennverfahren eingesetzt, beispielsweise eine Trägerdampfdestillation in einem entsprechenden Aufbereitungsapparat 10, der hier die Form von zwei hintereinandergeschalteten Bodenkolonnen 10' und 10" hat.

Außer der notwendigen Heizenergie wird über eine Leitung 18 überhitzter Dampf dem Apparat 10 zugeführt, der hier von einem eigenen Dampferzeuger 17, dem Speisewasser über eine Zufuhrleitung zugespeist wird, erzeugt wird.

Aus ökonomischen Gründen wird die verunreinigte Waschflüssigkeit zunächst im Wärmetauscher 14 vorgewärmt, bevor sie zum Apparat 10 der Waschflüssigkeits-Aufbereitungsstufe gelangt. Als Heizmedium dient dabei regenerierte Waschflüssigkeit aus dem Aufbereitungsapparat 10.

Die verunreinigte Waschflüssigkeit durchströmt von oben nach unten beide Bodenkolonnen 10' und 10" des Apparats 10. Der über Leitung 18 eingespeiste Trägerdampf wird im Gegenstrom zur Waschflüssigkeit geführt und vom Kopf der ersten Bodenkolonne 10' des Apparats 10, nun beladen mit den dampfförmigen Lösemitteln, über eine Leitung 11 abgezogen. Er wird in einem Trennapparat 12 in Form eines Tropfenabscheiders von mitgerissenen Siloxanöltröpfchen befreit. Dieses abgeschiedene Siloxanöl wird über die Leitung 13 der Einspeiseleitung 5 des Apparats 10 wieder zugeführt. Die Hauptmenge des flüssigen, von Verunreinigungen befreiten Siloxanöls wird als Sumpfprodukt der zweiten Bodenkolonne 10" des Apparats 10 über eine Rückleitung 28 entnommen und nach Vorkühlung im Wärmetauscher 14 und Nachkühlung in einem weiteren Wärmetauscher 15 mit über Leitung 16 zugemischtem Wasser vermischt als regenierte Wasser-Siloxanöl-Waschflüssigkeit über Leitung 4 wieder in die Absorptionskolonne 1 eingespritzt. Das aus dem Tropfenabscheider 12 austretende dampfförmige Lösemittel-Wasser-Gemisch wird im Kondensator 20 kondensiert und einem Trennapparat 22 zugeführt.

Ist das Lösemittel, wie im vorliegenden Fall begrenzt wasserlöslich, so wird das mechanisch abtrennbare Lösemittel im Trennapparat 22, der hier in Form eines Dekanters vorgesehen ist, aber auch durch ein ausreichend dimensioniertes Absetzbecken bzw. einen Schwerkraftabscheider ersetzt sein kann, abgetrennt und über eine Leitung 21 zur weiteren Verwendung abgeleitet.

Das aus dem Trennapparat 22 über eine Leitung 29 abgezogene Wasser ist weiterhin mit Lösemittelanteilen verunreinigt und muß in einer Abwasser-Aufbereitungsstufe vom restlichen Lösemittel befreit werden, bevor eine Einleitung in eine kommunale Abwasserkanalisation möglich ist.

In der dargestellten Abwasser-Aufbereitungsanlage 30, der das mit Lösemittel verunreinigte Abwasser über die Leitung 29 zu geführt wird, erfolgt die Abtrennung des Lösemittel durch Extraktion mittels eines Siliconöls, insbesondere Dimethylpolysiloxanöl. Die Aufbereitungsanlage 30 umfaßt einen Puffer 32, einen integrierten dynamischen Mischer 33 in Form eines Hochleistungsrührwerks zur Zumischung des Siliconöls, einen Trennapparat 34 zur Abtrennung des Wassers vom Silicon-Lösemittel-Gemisch und einen Aufbereitungsapparat 35 zur Trennung des den Trennapparat 34 verlassenden Gemisches aus Siliconöl und Lösemittel in die beiden Komponenten. Während das Lösemittel durch eine Leitung 36 abgezogen und ebenfalls dem Prozeß zugeführt werden kann, dem es entstammt, wird das Siliconöl über eine Leitung 37 aus dem Aufbereitungsapparat 35 zurück in den Puffer 32 mit dem Mischer 33 geleitet.

Die Extraktion des Lösemittels aus dem verunreinigten Wasser erfolgt mit Siliconöl, weil das Lösemittel eine stärkere Affinität zum Siliconöl als zum Wasser hat. Im Trennapparat 34, schwimmt das mit Lösemittel beladene Siliconöl auf, weshalb das Wasser rein abgetrennt und über eine Leitung 38 abgezogen werden kann. Eventuell mitgenommene Siliconölspuren sind unproblematisch, da sie zu keiner unzulässigen Abwasser-oder Kläranlagen-Belastung führen. Ist das aus dem Trennapparat 34 austretende Siliconöl nur geringfügig mit Lösemittel beladen, so kann es ohne weitere Aufbereitung auch wieder in den Absorptionsapparat 1' über eine Rückleitung 40 zurückgeleitet werden, da die absolute Menge an Lösemittel klein im Vergleich zur dort zuvor ausgeschiedenen Menge ist. In diesem Fall wird in den Mischer 33 hinter dem Kühler 15 entnommenes Siliconöl über eine Leitung 39 eingeleitet, um es so im Kreislauf führen zu können. Aufbereitungsapparat 35 sowie Leitung 36 entfallen dann.

Wird für den Apparat 10 der Waschflüssigkeits-Aufbereitungsanlage der Dampfbedarf nicht oder nicht vollständig durch den Dampfgenerator 17 gedeckt, sondern zum Teil dadurch, daß mit der verschmutzten Waschflüssigkeit über die Leitung 5 auch Wasser in den thermischen Trennapparat 10 eingespeist wird, bewirkt dies eine hohe Reinigungsleistung, da das Wasser unmittelbar aus der Waschflüssigkeit im Trennapparat verdampft und dadurch einen besonders guten Stoffaustausch bewirkt.

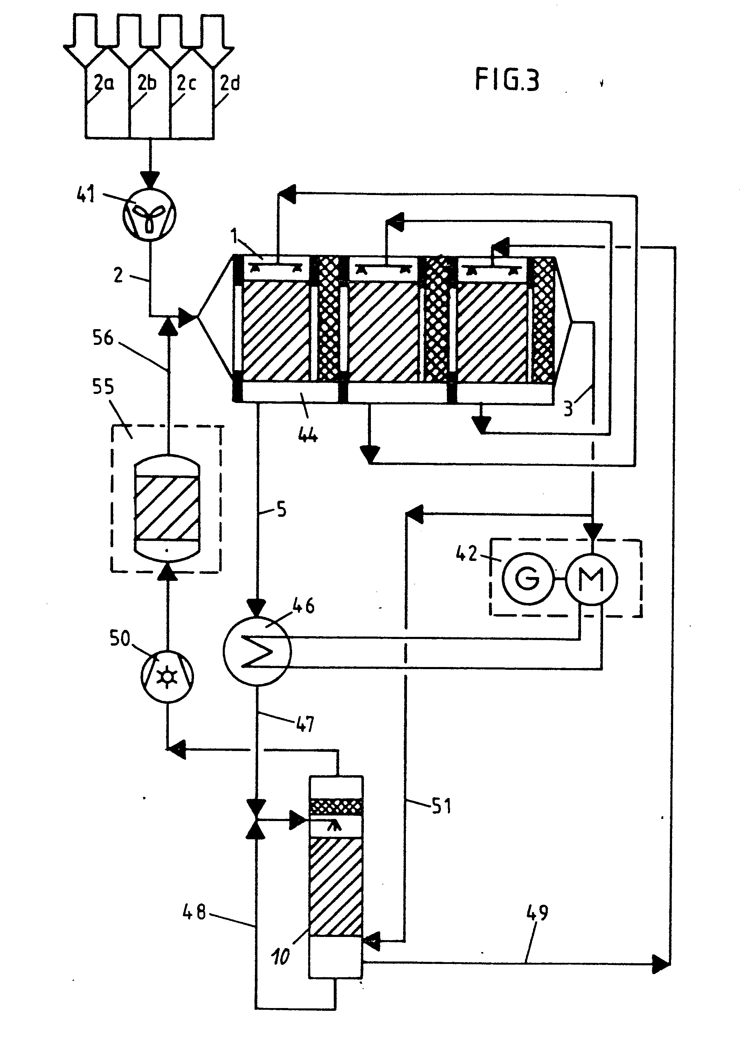

Ein Ausführungsbeispiel der Reinigung von Deponiegas ist anhand von Fig. 3 erläutert. Über mehrere Erfassungsleitungen 2a, 2b, 2c, 2d aus einem Deponiekörper abgezogenes Deponiegas wird gemeinsam von einem Gebläse 41 über die Einlaßleitung 2 der Absorptionskolonne 1, die hier als mehrstufiger Kreuz-Gegenstrom-Füllkörperwäscher ausgebildet ist, zugeführt.

In der dargestellten Ausführungsform der Absorptionskolonne 1 wird die Waschflüssigkeit, ein polyalkylenmodifiziertes Siloxanöl, nämlich Phenylethylpolysiloxanöl, im Gegenstrom zum von Lösemitteldämpfen zu befreiendem Deponiegas geführt. Die Lösemitteldämpfe werden dabei vom Siloxanöl absorbiert. Das gereinigte Deponiegas tritt durch eine Auslaßleitung 3 aus und wird zur Erzeugung elektrischer Energie einem Gasmotor 42 zugeführt.

Das in der Bodenwanne 44 der ersten Kammer anfallende lösemittelhaltige Siloxanöl wird über die Leitung 5 abgezogen und nach Vorwärmung in einem indirekten Wärmetauscher 46, der mit heißem Gasmotorkühlwasser beschickt wird, über eine Rohrleitung 47 einer zweiten Stufe, der Waschflüssigkeits-Aufbereitungsstufe, geführt, in welcher die Trennung des Siloxanöls von den anderen Bestandteilen erfolgt.

Dazu wird ein kombiniertes physikalisch-thermisches Trennverfahren in einen Apparat 10 eingesetzt, die als Vakuumstrippkolonne ausgebildet ist und der eigentlichen Regeneration des Siloxanöls dient. Die mit Lösemittel verunreinigte Waschflüssigkeit rieselt von oben nach unten durch die Vakuumstrippkolonne, wobei der größte Teil der Waschflüssigkeit über eine Rücklaufleitung 48 ständig im Kreislauf gefördert wird. Der Überschuß an Waschflüssigkeit wird über eine Leitung 49 als von Lösemitteln befreites Siloxanöl zurück zur Absorptionskolonne 1 geführt.

Die Entfernung der Verunreinigungen aus der Waschflüssigkeit in der Vakuumstrippkolonne erfolgt bei Drücken, die weit niedriger als Atmosphärendruck liegen. Zur Erzeugung und Aufrechterhaltung des Unterdruckes dient eine Vakuumpumpe 50, die die abgesaugten Gase und Dämpfe auf einen Druck verdichtet, der über Atmosphärendruck liegt. Als Treibgas wird ein Teilstrom gereinigten Deponiegases aus der Auslaßleitung 3 entnommen und über eine Leitung 51 im unteren Teil der Vakuumstrippkolonne zugeführt.

Durch diese Verfahrensweise erfolgt eine Erhöhung der Konzentration der Lösemitteldämpfe, welche nun in einem kleinen Teilstrom Deponiegas konzentriert sind.

Dieses mit Lösemitteldämpfen angereicherte Deponiegas, welches am Druckstutzen der Vakuumpumpe 50 anfällt, wird im vorliegenden Ausführungsbeispiel einer Rückgewinnungseinrichtung 55 in Form eines Aktivkohleadsorbers zugeführt. Die Verunreinigungen werden, unterstützt durch den über dem Atmosphärendruck liegenden Adsorptionsdruck an der Aktivkohle gebunden. Das weitestgehend gereinigte Deponiegas wird über eine Rohrleitung 56 dem Rohgas wieder zugemischt.

Die Regeneration der Aktivkohle und Rückgewinnung der Lösemittel erfolgt zweckmäßigerweise mittels Heißgas-Kreislaufdesorption, wobei als Heißgas ein Teilstrom des Gasmotorabgases eingesetzt werden kann. Die Regenerationsvarianten sind hinreichend bekannt; sie sind daher hier nicht näher beschrieben.

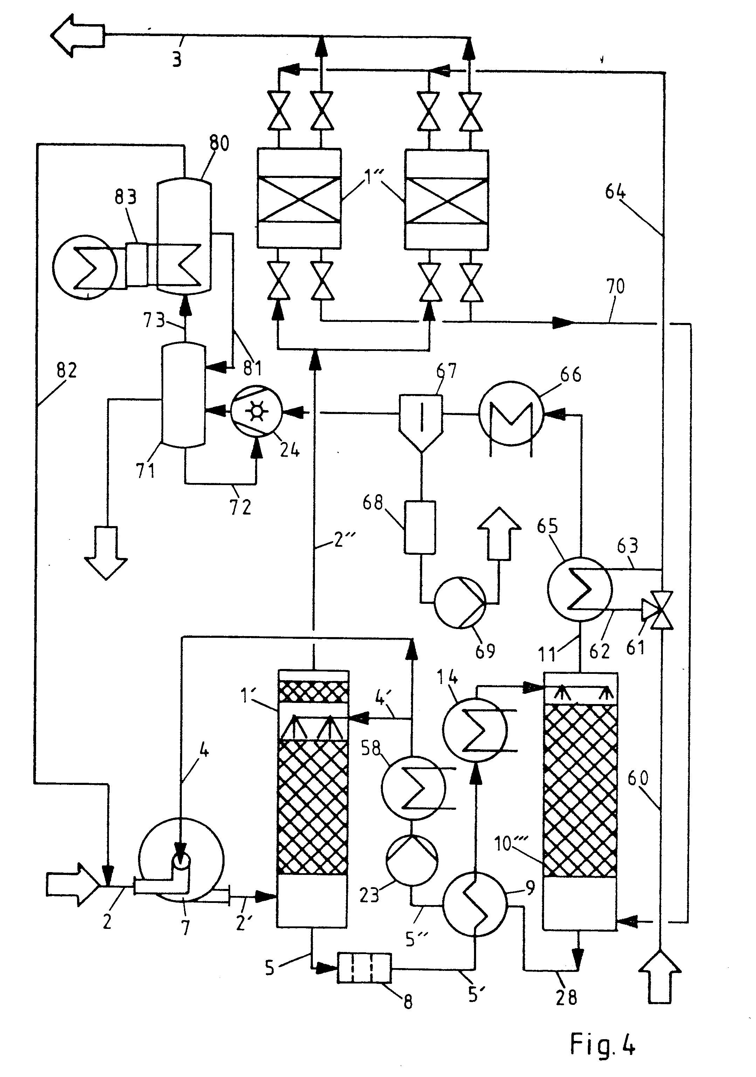

Ein Ausführungsbeispiel zur Lösemitteldampf-Elimination und der wasserarmen Rückgewinnung des Lösemittels, wie es vorzugsweise bei der Reinigung von Produktionsabluft aus Beschichtungs- und Kaschieranlagen, welche niedrigsiedende Lösemittel, wie z.B. Aceton, Methylethylketon, Ethylacetat und andere, enthalten, eingesetzt werden kann, ist in Fig. 4 dargestellt. Hier erfolgt die Abluftreinigung in der ersten Stufe in drei Luftreinigungsstufen. In der ersten Luftreinigungsstufe ist ein Gaswäscher 7 vom Desintegratortyp, in der zweiten Luftreinigungsstufe eine gepackte Absorptionskolonne 1' und in der dritten Luftreinigungsstufe sind zwei wechselweise betriebene Adsorber 1" eingesetzt.

Über eine Einlaßleitung 2 saugt ein Gaswäscher 7 vom Desintegratortyp das zu reinigende Luft-Lösemitteldampf-Gemisch an, und sorgt aufgrund seiner Konstruktionsmerkmale ohne Verwendung eines zusätzlichen Ventilators oder Gebläses für die Überwindung der nachfolgenden gasseitigen Druckverluste. Über eine Leitung 4 wird dem Gaswäscher vom Desintegratortyp Dimethylpolysiloxanöl mittig zugeführt. Aufgrund weiterer Konstruktionsmerkmale wird im Gaswäscher 7 gleichzeitig Staub und Lösemittel aus dem zu reinigendem Luft-Lösemitteldampf-Gemisch abgeschieden und im Dimethylpolysiloxanöl gebunden. Das vom Staub befreite und auch von Lösemittel vorgereinigte Luft-Lösemitteldampf-Gemisch wird gemeinsam mit dem nun staub-und lösemittelbeladenen Dimethylpolysiloxanöl über eine weitere Einlaßleitung 2' der weiteren gepackten Füllkörper - Absorptionskolonne 1' zugeführt. Beim Eintritt in diese Kolonne 1' über die weitere Einlaßleitung 2' trennt sich das von Staub und teilweise Lösemittel befreite Luft-Lösemitteldampf-Gemisch von dem flüssigen Absorptionsmittel, wobei die Gasphase von unten nach oben durch die Packung strömt. Über eine Leitung 4' wird Waschflüssigkeit in Form von Dimethylpolysiloxanöl der Packung der Füllkörper-Absorptionskolonne 1' aufgegeben, so daß innerhalb der Füllkörperkolonne Waschflüssigkeit und zu reinigendes Gas im Gegenstrom geführt werden. Die Lösemitteldämpfe werden dabei größtenteils vom Siloxanöl absorbiert. Die so weiter von Lösemitteldampf abgereinigte Luft strömt sodann durch eine weitere Packung im oberen Teil der Füllkörper-Absorptionskolonne 1' welche als Tropfenfänger ausgebildet ist, und die Abscheidung mitgerissener aerosolförmiger Waschflüssigkeitströpfchen gewährleistet. Die Verminderung der Lösemitteldampfkonzentration im Luft-Lösemitteldampf-Gemisch wird im Absorptionsteil der Luft reinigungsanlage, bestehend aus Desintegrator 1 und Füllkörper-Absorptionskolonne 1', nur soweit betrieben, wie dies ökonomisch sinnvoll ist.

Die Endreinigung, d.h. die Absenkung der Lösemitteldampfkonzentration im Luft-Lösemitteldampf-Gemisch gemäß den gesetzlich geforderten Emissionsgrenzwerten wird in der nachfolgenden Adsorptionsstufe durchgeführt, welche kontinuierlich, oder, wie im vorliegenden Ausführungsbeispiel dargestellt, diskontinuierlich arbeitet. Über eine weitere Einlaßleitung 2" wird das Luft-Lösemitteldampf-Gemisch einem der beiden wechselweise betriebenen Adsorber 1" zugeführt. Die Adsorber enthalten jeweils eine Festkörperschüttung aus körnigem Adsorbens, z.B. Aktivkohle, Silicagel oder zeolithisches Molekularsiebmaterial, welches die Lösemitteldampfmoleküle während der Passage des Luft-Lösemitteldampf-Gemisches durch die Schüttung adsorptiv bindet. Im Austritt jedes Adsorbers 1" ist Lösemitteldampf in der Luft nur noch in geringsten Spuren vorhanden. Die Luft kann über eine Auslaßleitung 3 unmittelbar in die Atmosphäre abgeleitet werden.

Da sowohl das Absorptionsmittel, das Dimethylpolysiloxanöl, als auch das Adsorptionsmittel, z.B. die Aktivkohle, unter Gewährleistung der Reinigungskapazität der Gesamtanlage nur begrenzte Lösemitteldampfmengen aufnehmen können, muß sowohl die Waschflüssigkeit als auch das Adsorptionsmittel in einer Aufbereitungsstufe wieder vom gebundenen Lösemitteldampf befreit werden, damit eine kontinuierliche und wirtschaftliche Betriebsweise der Gesamtanlage sichergestellt ist. Das im Sumpf der Füllkörper-Absorptionskolonne 1' anfallende lösemittelhaltige Dimethylpolysiloxanöl gelangt über eine Auslaßleitung 5 zu einem Feinfilter 8, worin die eventuell im Desintegrator 7 ausgewaschenen Feststoffe zurückgehalten werden, sofern diese die Waschflüssigkeitsaufbereitung nachhaltig negativ beeinflussen würden. Die so von Feststoffen befreite aber noch lösemittelhaltige Waschflüssigkeit gelangt über eine Leitung 5' zu einem rekuperativen Wärmeaustauscher 9 und einem Wärmetauscher 14 zur eigentlichen Wiederaufarbeitungsstufe der Waschflüssigkeit, welche im vorliegenden Falle ebenfalls als gepackte Füllkörperkolonne 10" ausgeführt ist. Die lösemittelbeladene Waschflüssigkeit strömt von oben nach unten durch die Packung der Füllkörperkolonne 10", wobei im Gegenstrom ein inertes Trägergas, zugeführt über die Leitung 70, strömt. Die Trennung des Siloxanöles von den anderen Bestandteilen (Lösemittel und eventuell mitausgeschiedenes Wasser) in der Waschflüssigkeitsaufbereitungs-Füllkörperkolonne 10" wird begünstigt durch erhöhte Systemtemperaturen und erniedrigter Systemdrücke. Daher erfolgt zunächst eine Vorwärmung der mit Lösemittel beladenen Waschflüssigkeit im rekuperativen Wärmeaustauscher 9, wobei als Heizmedium die heiße aber regenerierte Waschflüssigkeit über eine Leitung 28 zugeführt wird, und letztlich eine weitere Temperaturerhöhung der Waschflüssigkeit im Wärmetauscher 14, wobei hier als Heizmedium für den indirekten Energieeintrag beispielsweise Dampf oder Thermalöl eingesetzt werden kann. Der die Effektivität der Aufbereitungsstufe stark positiv beeinflussende erniedrigte Systemdruck wird im vorliegenden Fall durch eine Vakuumpumpe 24 erzeugt. Aufgrund der durch die Systembedingungen verschobenen thermodynamischen Gleichgewichtszustände wird das Lösemittel aus der Waschflüssigkeit ausgetrieben und in Dampfform mit dem im Gegenstrom geführten Inertgasträgerstrom über die Leitung 11 ausgetragen. Die somit von Lösemittel im wesentlichen befreite Waschflüssigkeit wird am Sumpf der Kolonne über die Leitung 28 abgezogen und im schon erwähnten Rekuperativ-Wärmeaustauscher 9 vorgekühlt, sodann über die Leitung 5" und eine Pumpe 23 zur Nachkühlung einem Wärmeaustauscher 58 zugeführt, wodurch gewährleistet wird, daß nun die über Leitung 4' der Füllkörper-Absorptionskolonne 1' und die über Leitung 4 dem Gaswäscher 7 vom Desintegratortyp zugeführte Absorptionsflüssigkeit wieder eine ausreichende Aufnahmekapazität für Lösemittel und damit Reinigungsfähigkeit erreicht hat.

Die Aufbereitung der Waschflüssigkeit erfolgt im geschilderten Ausführungsbeispiel kontinuierlich, wogegen die Aufbereitung, d.h. die Regeneration des Adsorbens, im vorliegenden Fall diskontinuierlich durchgeführt wird. Einer der beiden Adsorber 1" befindet sich jeweils im Status "Adsorption" und der andere im Status "Desorption".

Auch hier wird die Effektivität der Desorption durch niedrige Systemdrücke und erhöhte Systemtemperaturen begünstigt. Um jedoch die bekannte Zersetzungsgefahr von Lösemitteln bei der Desorption von z.B. beladener Aktivkohle stark zu vermindern, erfolgt die Desorption unter inerten Bedingungen und stark verringerten Systemdrücken und bei Systemtemperaturen von vorteilhafterweise unter 380 K. Aus diesem Grunde ist der in Desorption stehende Adsorber 1" über die Leitung 70 mit der Waschflüssigkeits-Aufbereitungs-Füllkörperkolle 10‴ verbunden und steht somit unter dem annähernd gleichen Systemunterdruck, der durch die Vakuumpumpe 24 erzeugt ist. Über eine Einlaßleitung 60 und einer Dreiwegeharmatur 61 wird Inertgas, wie z.B. Stickstoff, $CO_2$ oder ein anderes sauerstoffarmes Gas, dem in Desorption stehenden Adsorber 1" zugeführt, wobei vorteilhafterweise das Inertgas über Leitung 62 zum Wärmeaustauscher 65 zur Vorwärmung geführt wird, so daß über Leitung 63 und 64 vorgewärmtes Inertgas im Gegenstrom zur ursprünglichen Beladungsrichtung in den in Desorption stehenden Adsorber 1" eingeleitet wird.

Infolge der Systembedingungen geht zuvor an dem Adsorbens gebundenes Lösemittel dampfförmig in die Trägergasphase, so daß dieses über Leitung 70 mit Trägergas der Waschflüssigkeits-Aufbereitungs-Füllkörperkolonne 10‴ zugeführt wird, was sich jedoch für die Wirksamkeit der Waschflüssigkeits-Aufbereitungs-Füllkörperkolonne 10‴ nicht negativ auswirkt. In der geschilderten Weise wird somit das in der Feinreinigungsstufe (Aktivkohle-Adsorber) 1‴ zurückgehaltene Lösemittel letztlich der Waschflüssigkeits-Aufbereitungs-Füllkörperkolonne 10‴ zugeführt und zusammen mit den dort ausgetriebenen Lösemitteldämpfen über die Leitung 11 abgezogen. Ist die Verlagerung der zurückgehaltenen Lösemitteldämpfe von den Adsorbern in die Rückgewinnungseinrichtung im gewünschten Maß erfolgt, muß, um die nachfolgende Adsorption wieder sicherzustellen, die noch warme Adsorbenspackung gekühlt werden. Dies erfolgt durch Umschalten der Armatur 61, so daß das Inertgas nun ohne Vorwärmung über die Leitung 64 durch den in Desorption stehenden Adsorber 1" strömt und die Packung kühlt. Durch diese Verfahrensvariante wird erreicht, daß die Reinigungsleistung des gesamten Abluftreinigungssystems ständig bestehen bleibt, wobei zur Regeneration der Adsorber 1" keinerlei zusätzliche Betriebsmittel bzw. Energien zugeführt werden müssen, und die bekannten Nachteile sowohl einer reinen Absorption, als auch einer reinen Adsorption zur Abscheidung von Lösemitteldampf aus einem Luft-Lösemitteldampf-Gemisch nicht auftreten können.

Das somit über die Leitung 11 aus der Waschflüssigkeits-Aufbereitungs-Füllkörperkolonne 10‴ abgehende heiße Lösemitteldampf-Inertgas-Gemisch dient aus ökonomischen Gründen zunächst als Heizmedium für einen Inertgas-Vorwärmer 65 und gelangt danach in einen Gaskühler 66, wo entsprechend den sich einstellenden Lösemitteltaupunkten bereits Lösemittel auskondensieren kann, welches im einem Trennapparat 67 von der Gasphase abgeschieden wird und in einem Behälter 68, welcher als Pumpenvorlage einer Lösemittelpumpe 69 dient, zwischengespeichert wird. Das so vorgekühlte noch gasförmige Inertgas-Lösemitteldampf-Gemisch wird über den Saugstutzen der Vakuumpumpe 24 abgesaugt und verdichtet, so daß an derem Druckstutzen nahezu Atmosphärendruck ansteht. Bei der Verdichtung des Lösemitteldampf-Inertgas-Gemisches in der Vakuumpumpe 24 vom Ansaugdruck - (= Systemdruck im gesamten Regenerationssystem) auf nahezu atmosphärischen Druck kondensiert weiteres Lösemittel aus, welches in einem Trennbehälter 71 von der Gasphase getrennt wird. Im vorliegenden Falle ist die Vakuumpumpe 24 als Flüssigkeitsring-Vakuumpumpe ausgeführt. Als Ringflüssigkeit wird im vorliegenden Fall Eigenmedium, d.h. auskondensiertes Lösemittel, benutzt, welches vom Trennbehälter 71 über eine Leitung 72 zur Flüssigkeitsring-Vakuumpumpe 24 zurückgeführt wird und gemeinsam mit den zusätzlich auskondensierten Lösemitteldämpfen wieder in den Trennbehälter 71 gelangt.

Der Überschuß, letztlich aus der Produktionsabluft entferntes Lösemittel, wird als Überlauf aus dem Trennbehälter 71 abgeführt und kann für die Produktion wiederverwendet werden. Die Gasphase, welche aus dem Trennbehälter 71 über eine Leitung 73 abgeführt wird, ist entsprechend den Systemtemperaturen und -drucken mit Lösemittel gesättigt und wird zur weiteren Lösemitteldampf-Abreicherung einer Tiefkühleinheit 80 zugeführt. Infolge der weiteren Abkühlung des mit Lösemitteldampf beladenen Inertgasstromes in dieser Tiefkühleinheit kondensiert weiteres Lösemittel aus, welches in einer Überlaufeinrichtung über die Leitung 81 in den Trennbehälter 71 zurückgeführt wird und gleichzeitig als Kühlmedium für die Betriebsflüssigkeit der Flüssigkeitsring-Vakuumpumpe 24 dient. Das nun weitestgehend lösemittelbefreite Inertgas wird über eine Leitung 82 dem Rohgas wieder zugemischt, um gasseitige Lösemittelverluste zu vermeiden. Zur Kühlung der Tiefkühlkondensationseinheit 80 wird vorteilhafterweise ein Kältemaschinenkreislauf 83 mit zugehörigem Kältemittelverdampfer und Kältemittelkondensator eingesetzt.

Das aus dem Trennbehälter 71 abgekühlte Lösemittel ist aufgrund der Verfahrenskonzeption nahezu wasserfrei, eine für viele Anwendungsfälle erhobene Forderung an das aus der Produktionsabluft zurückgewonnene Lösemittel, und kann ohne aufwendige nachfolgende Aufbereitung dem Verarbeitungsprozeß wieder zugeführt werden.

## Ansprüche

1. Lösemittel-Eliminationsverfahren zur Reinigung von Luft, Abgas, Pyrolysegas, Deponiegas, Biogas oder dergleichen, von Lösemitteldämpfen, bei dem
in einer ersten Stufe das verunreinigte Gas zur Absorption der Lösemitteldämpfe mit einer Waschflüssigkeit in innige Berührung gebracht wird,
in einer Aufbereitungsstufe die verunreinigte Waschflüssigkeit einer den Dampfpartialdruck der Lösemittel erniedrigenden Wasserdampfdestillation oder Trägergasdestillation, vorzugsweise unter Vakuum, zur Wiedergewinnung der reinen Waschflüssigkeit und Zurückführung in die Absorptionsstufe unterworfen wird,
und
in einer dritten Stufe das in der Aufbereitungsstufe anfallende flüssige Wasser-Lösemittel-Gemisch einer Wasseraufbereitung unterworfen wird, in der das Lösemittel abgeschieden wird, das ebenfalls einer Wiederverwendung zugeführt werden kann, und das Wasser soweit gereinigt wird, daß es wiederverwendet oder als Abwasser abgeleitet werden kann,
dadurch **gekennzeichnet,**
daß in der ersten Stufe die Absorption der Lösemitteldämpfe an Dimethylpolysiloxanöl oder polyalkylenmodifizierten Siloxanöl mit niedrigem Oligomergehalt als Waschflüssigkeit vorgenommen wird.

2. Verfahren nach Anspruch 1,
dadurch **gekennzeichnet,**
daß in der ersten Stufe die Absorption an einem Dimethylpolysiloxanöl-Wasser-Gemisch vorgenommen wird.

3. Verfahren nach Anspruch 1 oder 2,
dadurch **gekennzeichnet,**
daß ein Dimethylpolysiloxanöl oder ein polyalkylenmodifiziertes Siloxanöl mit einem Molekulargewicht von 1 200 bis 30 000 eingesetzt wird.

4. Verfahren nach einem der Ansprüche 1 bis 3 zur Reinigung von zusätzlich mit staubförmigen und/oder aerosolförmigen Bestandteilen verunreinigter Luft,
dadurch **gekennzeichnet,**
daß die Absorption in einem Gaswäscher vom Desintegratortyp vorgenommen wird.

5. Verfahren nach einem der Ansprüche 1 bis 4,
dadurch **gekennzeichnet,**
daß in der Aufbereitungsstufe zur Erniedrigung des Lösemittelpartialdruckes ein sauerstofffreies Inertgas, vorzugsweise Stickstoff, eingeblasen wird.

6. Verfahren nach einem der Ansprüche 1 bis 5,
dadurch **gekennzeichnet,**
daß das in der Aufbereitungsstufe abgehende Wasser nach Kondensation und mechanischer Scheidung vom Lösemittel mit dem Siloxanöl oder getrennt von diesem der Absorptionsstufe wieder zugeführt wird.

7. Verfahren nach einem der Ansprüche 1 bis 5,
dadurch **gekennzeichnet,**
daß das in der Aufbereitungsstufe abgehende Wasser nach Kondensation und mechanischer Scheidung vom Lösemittel in der dritten Stufe von den noch vorhandenen Lösemittelspuren durch Extraktion mit Siliconöl, insb. Dimethylpolysiloxanöl, befreit wird.

8. Verfahren nach Anspruch 7,
dadurch **gekennzeichnet,**
daß nach der Extraktion der Lösemittelspuren aus dem Wasser das Siliconöl mittels mechanischer Trennung abgetrennt wird.

9. Verfahren nach Anspruch 7 oder 8,
dadurch **gekennzeichnet**,
daß das von Lösemittelspuren befreite Wasser mit dem Siliconöl oder getrennt von diesem der Absorptionsstufe wieder zugeführt wird.

10. Verfahren nach Anspruch 1 oder 4,
dadurch **gekennzeichnet**,
daß in der ersten Stufe der Absorption der Lösemitteldämpfe an Dimethylpolysiloxanöl unterworfene Luft durch Adsorption von Lösemitteldampfresten an festem Adsorbens nachgereinigt wird.

11. Verfahren nach Anspruch 10,
dadurch **gekennzeichnet**,
daß das feste Adsorbens durch Zufuhr eines Inertgases in inerter Atmosphäre desorbiert - (regeneriert) wird.

12. Verfahren nach Anspruch 11,
dadurch **gekennzeichnet**,
daß die Desorption bei niedrigem Druck und niedriger Temperatur, vorzugsweise unter 380 K, vorgenommen wird.

13. Verfahren nach Anspruch 10 bis 12,
dadurch **gekennzeichnet** ,
daß die Regeneration des Adsorbens und der beladenen Absorptionsflüssigkeit gemeinsam im Verbund erfolgen.

14. Verfahren nach Anspruch 11 bis 13,
dadurch **gekennzeichnet**,
daß mit aus der Aufbereitungsstufe abgehendem heißen Lösemitteldampf-Inertgas-Gemisch Inertgas zur Regenerierung des Adsorbens vorgewärmt wird.

FIG.1

0 221 571

P-60 980
VT Theisen

FIG. 2

0 221 571

FIG.3

Fig. 4